(19) Europäisches Patentamt
European Patent Office
Office européen des brevets

(11) Veröffentlichungsnummer: **0 187 391 B1**

(12) **EUROPÄISCHE PATENTSCHRIFT**

(45) Veröffentlichungstag der Patentschrift: **14.04.93**

(51) Int. Cl.5: **C08F 8/00**, C08G 81/02, C12N 11/08, C07K 1/04

(21) Anmeldenummer: **85116662.9**

(22) Anmeldetag: **31.12.85**

Die Akte enthält technische Angaben, die nach dem Eingang der Anmeldung eingereicht wurden und die nicht in dieser Patentschrift enthalten sind.

# (54) Pfropfcopolymerisate aus vernetzten Polymeren und Polyoxyethylen, Verfahren zu ihrer Herstellung und ihre Verwendung.

(30) Priorität: **04.01.85 DE 3500180**

(43) Veröffentlichungstag der Anmeldung: **16.07.86 Patentblatt 86/29**

(45) Bekanntmachung des Hinweises auf die Patenterteilung: **14.04.93 Patentblatt 93/15**

(84) Benannte Vertragsstaaten: **AT BE CH DE FR GB IT LI LU NL SE**

(56) Entgegenhaltungen:
**EP-A- 0 098 110** **DE-A- 1 795 353**
**FR-A- 2 077 297** **FR-A- 2 195 641**
**GB-A- 879 950** **GB-A- 1 002 343**

**MAKROMOLECULAR CHEMIE, RAPID COMMUNICATIONS, Band 3, 1982, Seiten 217-223; H. BECKER et al.: "Polyethyleneglycols grafted onto crosslinked polystyrenes: A new class of hydrophilic polymeric supports for peptide synthesis"**

**MAKROMOLEKULAR CHEMIE; RAPID COMMUN., Band 2 1982, Seiten 621-626. Eishun Tsuchida et al, 'Rapid Photoreduction of Methylviologen Sensitized by the Tris(bipyridyl)ruthenium(II) Complex Bound to Polystyrene Beads with a Spacer Group'**

(73) Patentinhaber: **Bayer, Ernst, Prof. Dr.**
**Bei der Ochsenweide 17**
**W-7400 Tübingen 1(DE)**

(72) Erfinder: **Bayer, Ernst, Prof. Dr.**
**Bei der Ochsenweide 17**
**W-7400 Tübingen 1(DE)**

(74) Vertreter: **Kinzebach, Werner, Dr.**
**Patentanwälte Reitstötter, Kinzebach und Partner Sternwartstrasse 4 Postfach 86 06 49**
**W-8000 München 86 (DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Pfropfcopolymerisate aus vernetzten Polymerisaten und linearem Polyoxyethylen, Verfahren zu ihrer Herstellung und ihre Verwendung.

Pfropfcopolymere aus vernetzten unlöslichen Polymeren und Polyoxyethylen sind als Träger für Peptidsynthesen und zur Immobilisierung von niedermolekularen und hochmolekularen Wirkstoffen für Affinitätschromatographie, Diagnostika und biotechnologische Verfahren von Bedeutung. Bisher wurden solche Pfropfcopolymere aus vernetztem chlormethyliertem Polystyrol und kürzeren Polyethylenglykolen nach der Williamsonschen Ethersynthese dargestellt:

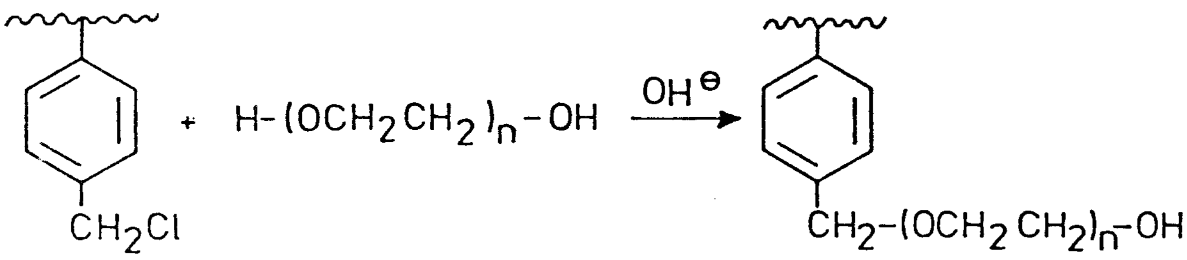

(vgl. Makromol. Chem. Rapid Commun. 3, 217 (1982); 2, 621 (1981). Ein Nachteil dieses Verfahrens ist die oft zu geringe Beladung des Polystyrols mit Polyoxyethylen. Vor allem mit zunehmendem Molekulargewicht des Polyoxyethylens sinken die Ausbeuten sehr stark und es konnten nur kleinere Oligoethylenglykolketten bis zu Molekulargewichten von 1320 an Polystyrol gebunden werden. Nachteilig bei der Ethersynthese ist auch die Bildung cyclischer Ether durch Reaktion beider terminaler Hydroxylgruppen des Polyoxyethylens mit dem chlormethylierten Polystyrol, wodurch die für die Trägerfunktion notwendigen terminalen Hydroxylgruppen nochmals vermindert werden.

In Makromol.Chem.,Rapid Commun.2,621-626(1981) wird die Herstellung eines Pfropfcopolymerisats aus Polystyrol und einem Polyoxyethylen beschrieben. Zu diesem Zweck wird chlormethyliertes Polystyrol mit einem Polyoxyethylen mit einem Molekulargewicht von 1000 in Gegenwart einer Base umgesetzt. Auch in Makromol.Chem.,Rapid Commun.3,217-223(1982) werden Pfropfcopolymerisate auf Basis von Polystyrol und Polyethylenglykolen beschrieben. Dabei wird chlormethyliertes Polystyrol mit dem Natriumsalz eines Polyethylenglykols mit einem Molekulargewicht von 400 umgesetzt.

Die auf diese Weise hergestellen Pfropfcopolymerisate wiesen bei ihrer Anwendung jedoch ungenügende Reaktivität, zu geringe Beladung mit Polyoxyethylen und zu geringe Stabilität der Bindung bei der Immobilisierung auf. Man hat daher häufig lineare, homogen lösliche Polymerisate, wie Polyoxyethylen, für Peptidsynthesen herangezogen. Diese löslichen Polymerisate lassen sich jedoch nur außerordentlich schwierig abtrennen.

Aufgabe der Erfindung war es deshalb, Pfropfcopolymerisate, die bessere Reaktivität, höhere Beladung und größere Stabilität der Bindung bei der Immobilisierung aufweisen als bekannte Polymerisate, sowie ein Verfahren zur Herstellung dieser Pfropfcopolymerisate zu schaffen, das die Nachteile des oben erwähnten Verfahrens des Stands der Technik nicht besitzt.

Diese Aufgabe wird gelöst durch die erfindungsgemäßen Pfropfcopolymerisate, die an einem vernetzten Polymerisat mehrere Polyoxyethylenreste mit einem mittleren Molekulargewicht von 500 - 20 000 aufweisen, wobei 0,02 - 15 meq freie Hydroxygruppen/g Copolymerisat vorhanden sind und wobei die Pfropfcopolymerisate dadurch erhältlich sind, daß man das vernetzte Polymerisat mit Ethylenoxid zur Reaktion bringt.

Vorzugsweise beträgt die Menge an Hydroxygruppen 0,05-15 meq/g, am bevorzugtesten 0,05-10 meq/g.

Bei Verwendung von vernetzten Polystyrolen liegt dieser Bereich vorzugsweise bei 0,02 - 2 meq/g,insbesondere bevorzugt bei 0,05 - 0,7 meq/g. Bei Verwendung von Polyvinylalkoholen als vernetzten Polymerisaten liegt dieser Bereich bei 1 - 15 meq/g, vorzugsweise bei 1 - 10 meq/g.

Das mittlere Molekulargewicht der Polyoxyethylenketten liegt vorzugsweise im Bereich von 800 - 10 000, insbesondere bevorzugt im Bereich von 900 - 6000, wobei das Optimum im Bereich von 2 000 - 3 000 liegt.

Das vernetzte Polymerisat ist vorzugsweise ein Polyvinylalkohol, Polyhydroxystyrol, aus chlormethyliertem Polystyrol und Ethylenglykol oder Oligoethylenglykol hergestelltes Polymerisat oder durch Hydroxygruppen funktionalisiertes Polyacrylat oder Polymethacrylat. Der Vernetzungsgrad dieser Polymerisate liegt dabei im

allgemeinen bei 0,05 - 10 % vorzugsweise bei 0,1 - 8 %,insbesondere bevorzugt bei 0,2 - 5 %. Am geeignetsten ist ein Vernetzungsgrad von 1 - 2 %, insbesondere bei Verwendung von mit Divinylbenzol vernetzten Polystyrolen.

Die Bindung der Polyoxyethylenketten an die vernetzen Polymerisate erfolgt vorzugsweise über Hydroxy- oder Aminogruppen des vernetzen Polymerisats. Diese können per se im Polymerisat vorhanden sein, wie z.B. im Polyvinylalkohol und Polyhydroxystyrol, oder nachträglich durch Funktionalisierung eingeführt worden sein. Die Menge an Hydroxygruppen (Funktionalisierungsgrad) liegt im allgemeinen im Bereich von 0,02 - 25meq/g vernetzes Polymerisat, vorzugsweise bei 0,05 - 15 meq/g. Am zweckmäßigsten verwendet man ein Polystyrol mit einem Funktionalisierungsgrad von 0,05 - 0,7 meq/g oder einen Polyvinylalkohol mit einem Funktionalisierungsgrad von 1 - 15 meq/g.

Das Verfahren zur Herstellung der erfindungsgemäßen Pfropfcopolymerisate ist dadurch gekennzeichnet, daß man vernetzte Polymerisate mit Ethylenoxid zur Reaktion bringt.

Durch geeignete Wahl der Reaktionstemperatur, der Reaktionszeit, der Monomerenkonzentration und des Lösungsmittels kann man die Reaktion so steuern, daß beliebige mittlere Molekulargewichte der Polyoxyethylenkette erhalten werden können. Vorzugsweise liegt dabei die Reaktionstemperatur im Bereich von 20 - 100 °C, insbesondere bevorzugt im Bereich von 60 - 80 °C. Die Reaktionszeit beträgt vorzugsweise 30 Minuten - 150 Stunden.

Als Reaktionsmedium verwendet man reaktionsinerte, aprotische, organische Lösungsmittel, insbesondere geeignet sind Äther, wie beispielsweise Dioxan, Tetrahydrofuran oder Diglykolether, sowie Toluol, Benzol, Xylol, Dimethylformamid oder Dimethylsulfoxid.

Gegebenenfalls führt man die Reaktion in Gegenwart basischer oder saurer Katalysatoren durch. Geeignete basische Katalysatoren sind z.B. Alkalimetalle, wie Lithium, Natrium oder Kalium; Metallhydride, wie Natriumhydrid, Calciumhydrid; Alkalimetallamide, wie Natriumamid; Grignardverbindugen oder Alkoholate. Vorzugsweise verwendet man Kalium. Geeignete saure Katalysatoren sind z.B. Chlorwasserstoff, Schwefelsäure oder p-Toluolsulfonsäure.
Vorteilhafterweise bindet man in einer ersten Stufe Oligoethylenglykolketten der Formel $H-(OCH_2\ CH_2)_n-OH$, worin n für 2 - 4 steht, an das vernetzte Polymerisat. Diese Reaktion wird unter Bedingungen durchgeführt, die für eine Verätherung oder eine Williamsonsynthese üblich sind. Als Base für die Williamsonsynthese kann auch wäßrige Natriumhydroxydlösung dienen.

In einer zweiten Stufe wird dann die Oligoethylenkette mit Ethylenoxyd verlängert. Dieses zweistufige Verfahren ist insbesondere für die Herstellung von Polystyrol-Polyoxyethylen-Pfropfcopolymerisaten geeignet.

Die erfindungsgemäßen Pfropfcopolymerisate sind als Träger für Peptidsynthesen, Nukleotidsynthesen, Affinitätschromotaographie, zur Immobilisierung von Enzymen bei biotechnologischen Reaktionen und von Wirkstoffen bei Diagnostika brauchbar.

Aufgrund der in den erfindungsgemäßen Pfropfcopolymerisaten vorhandenen Hydroxygruppen können gemäß bekannten Methoden der Peptidsynthese (Peptides, Vol. 2, Academic Press, 1979) stufenweise Peptide aufgebaut werden. Überraschenderweise zeigen dabei solche immobilisierten Polyoxyethylene mit einem mittleren Molekulargewicht von 1000 - 2000 bei Peptidkupplungen eine höhere Reaktionsgeschwindigkeit wie nicht immobilisierte Polyoxyethylene in Lösung. Diese hohe Reaktivität erlaubt deshalb auch, die Immobilisierung von Proteinen, Enzymen und anderen Wirkstoffen.

Beschreibung der Versuche

Polymerisationsgrad bzw. mittleres Molekulargewicht der gepfropften Copolymeren lassen sich durch die Parameter Temperatur, Zeit und Monomerkonzentration beeinflussen. Z.B. bei PSPOE (Polystyrol-Polyoxyethylen) hat sich gezeigt, daß bei niedrigen Reaktionstemperaturen (56 - 58 °C) trotz hoher Monomerzugabe und langer Reaktionszeit keine hohen Polymerisationsgrade zu erzielen sind; man erhält ein mittleres Molekulargewicht des auf den modifizierten Polystyrol-Träger aufgepfropften Polyoxyethylens (POE) von 2000 (PSPOE 2000).

Zu hohe Reaktionstemperaturen bzw. zu große Polymerisationsgeschwindigkeiten führen zur Zerstörung der Polystyrol-Trägermatrix. Als günstige Reaktionstemperatur haben sich 70 - 73 °C erwiesen. Durch Variation der Monomerzugabe und der Reaktionszeit können unterschiedliche Polymerisationsgrade erzielt werden. PS-POE 5600 veranschaulicht den Reaktionsverlauf bei niedrigeren Monomerzugaben während die Kurve des PSPOE 6900 den Reaktionsverlauf bei höheren Monomerzugaben veranschaulicht. Daten der Pfropfcopolymeren PSPOE sind in Tabelle 1 aufgeführt, der Reaktionsverlauf ist in der Figur 1 dargestellt.

Beispiel 1

Herstellung des Trägers aus vernetztem, chlormethyliertem Polystyrol (PS) und Tetraethylenglykol PSTEG:

Zu einer Lösung aus 350 ml Dioxan, 23 ml (133 mMol) Tetraethylenglykol (TEG) und 13.5 ml einer 20 %igen wäßrigen NaOH-Lösung gibt man 10 g (12.5 meq Cl) chlormethyliertes Polystyrol, welches mit 1 % Divinylbenzol (DVB) vernetzt ist und erhitzt zum Sieden. Nach 120 Stunden ist die Reaktion beendet; man saugt den Träger ab und wäscht 10 mal mit jeweils 100 ml Dioxan, Dioxan/$H_2O$ 1:1, Ethanol, $CH_2Cl_2$, Dioxan, Methanol und trocknet über $P_4O_{10}$ im Vakuum.

| Elementaranalyse: | | | |
|---|---|---|---|
| $C_{70}H_{73}O_{5.2}$: Ber. | C 84.1 | H 7.4 | O 8.3 |
| Gef. | C 83.8 | H 8.1 | O 8.1 |

Die Hydroxylzahl wurde mit 0.99 meq/g Copolymer ermittelt.

Beispiel 2

Herstellung von Polystyrol-Polyethylenglykol (mittleres Molgewicht der Polyethylenglykolkette = 2000-($PSPOE_{2000}$)):

9,4 g (ca. 9.4 meq OH) des nach Beispiel 1 erhaltenen PSTEG-Trägers werden mit 370 mg (9.4 mmol) Kalium in 600 ml trockenem Dioxan suspendiert und unter kräftigem Rühren unter $N_2$-Atmosphäre über Nacht bei 60 - 70°C gerührt. Dabei verfärbt sich die Lösung orange. Die Reaktionstemperatur wird auf 56 - 58°C eingeregelt und innerhalb von 53.5 Stunden werden 267 g (6.6 mol) Ethylenoxid in die Reaktionslösung geleitet. Das Reaktionssystem wird dann geschlossen, das Reaktionsgemisch weitere 52.5 Stunden gerührt. Unter Druck werden innerhalb von 2 Stunden weitere 37 g (0.85 mol) Ethylenoxid in das geschlossene System eingeleitet. Nach einer Gesamtreaktionszeit von 320 Stunden bricht man die Reaktion ab; überschüssiges Ethylenoxid wird mit $N_2$ ausgetrieben, die Reaktionslösung abgekühlt, mit verdünnter wäßriger HCl auf pH 3-4 angesäuert und das Produkt aufgearbeitet.

BEISPIEL 3

Herstellung von PS-$POE_{5600}$

10 g (ca. 10 mmol OH) des PS-TEG-Trägers werden mit 500 mg (12.7 meq) Kalium bei 60-70°C unter Stickstoff suspendiert und über Nacht gerührt, wobei sich die Reaktionslösung gelborange verfärbt. Bei 70°C werden zu Beginn innerhalb von 15 Stdn. 25 g (0.57 mol) Ethylenoxid in die Reaktionsmischung geleitet. Dabei erhöht sich die Reaktionstemperatur auf 72-73°C. In den folgenden 2.5 Stdn. leitet man 15 g (0.34 mol), dann innerhalb von 5 Stdn. 71 g (1.6 mol) Ethylenoxid in die Reaktionsmischung. Das Reaktionssystem wird jetzt geschlossen und 14 g Ethylenoxid werden in 30 Minuten unter Druck in den Gasraum des Reaktionssystems gepreßt. Man rührt weitere 14 Stdn., wobei die Temperatur der Reaktionslösung auf 68°C fällt. Weitere Ethylenoxidzugabe (86 g in 5 Stdn.) führt zunächst zu einer Temperaturerhöhung auf 70°C; dann jedoch fällt die Reaktionstemperatur bis zum Abbruch der Reaktion nach einer Gesamtreaktionszeit von 30.5 Stdn. auf 65° ab. Überschüssiges Ethylenoxid wird mit $N_2$ ausgetrieben, die Reaktionslösung abgekühlt, mit verdünnter wässriger HCl auf pH 3-4 angesäuert und aufgearbeitet.

Beispiel 4

Herstellung von PS-$POE_{6900}$:

10 g (ca. 10 mmol OH) PS-TEG-Träger werden mit 500 mg (12.7 mmol)Kalium unter $N_2$ in 6000 ml Dioxan suspendiert und über Nacht bei 65 - 70°C gerührt. Die Reaktionslösung wird schwach gelb. Die Temperatur des Reaktionsgemisches beträgt zu Beginn 70°C. Innerhalb von 12 Stunden werden dann 185 g (4.2 mol) Ethylenoxid in die Reaktionslösung geleitet, wobei 42 g (0.95 mol) in den ersten 2 Stunden zugegeben werden, die Reaktionstemperatur steigt dabei auf 73°C. Man schließt die Apparatur und rührt weitere 12.5 Stdn. wobei die Temperatur bis zum Ende der Reaktionszeit auf 68°C abfällt. Überschüssiges

Ethylenoxid wird mit $N_2$ ausgetrieben, die Reaktionsmischung abgekühlt, mit verdünnter wässriger HCl auf pH 3-4 angesäuert und aufgearbeitet.

Aufarbeitung der PS-POE-Copolymeren:

Das Polymer wird von der Reaktionslösung abgefrittet (G3) und je 8 mal mit Dioxan, Dioxan/$H_2O$ 1:1, Wasser, Ethanol, Dioxan und Methylenchlorid gewaschen. Nach dem letzten Waschgang wird mit Methylenchlorid/Diethylether 1:1 versetzt und abgesaugt. Dabei schrumpft das Copolymer etwas. Man wäscht 1 mal mit Ether, 1 mal mit Methylenchlorid und dann noch 3 mal mit Ether nach. Um eventuell noch vorhandenes lösliches POE herauszulösen wird 24 Stdn. mit THF im Soxhlet extrahiert, dann mit Ether 3 mal nachgewaschen und über $P_4O_{10}$ im Vakuum getrocknet.

BEISPIEL 5

Synthese des C-terminalen Dekapeptids der Insulin-B-Sequenz aus PS-POE-Pfropfcopolymeren:

44 g des nach Beispiel 4 dargestellten PS-POE-Polymers werden nach den Methoden der Liquid-Phase-Synthese (The Peptides, Vol. 2, Seite 285 ff. Academic Press, New York 1979) mit BOC-Glycin so verestert, daß 3.65 mMol BOC-Glycin gebunden werden. Anschließend wird stufenweise das Dekapeptid mit den in der Tabelle genannten Aminosäurederivaten nach den Methoden trägergebundener Peptidsynthesen aufgebaut.
6 g des nach obiger Vorschrift erhaltenen Dekapeptidpolymers werden in DMF suspendiert und unter $N_2$ mit einer Quecksilberdampflampe bei 330 nm und 25 °C 22 Stunden bestrahlt. Danach wird vom Polymer abfiltriert und die Lösung des Peptids zur Trockne eingedampft. Das in Lösung befindliche geschützte Dekapaptid wird an einer Kieselgelsäule mit Chloroform/Methanol/Essigester/Eisessig (65:25:9:1) als Eluens gereinigt. Die Peptidfraktionen werden gesammelt und anschließend mit Methanol als Eluens über eine Sephadex LH 20-Säule gereinigt. Man erhält 157 mg geschütztes Peptid, das eine Aminosäureanalyse von 1.10 Glu, 1.06 Arg, 1.01 Gly, 2.01 Phe, 1.03 Tyr, 0.96 Thr, 0.95 Pro, 1.02 Lys und 1.00 Ala zeigt. Die Schutzgruppen können mit HF abgespalten werden und man erhält so das freie Peptid.

Beispiel 6

Immobilisierung von Rinderserumalbumin an α-Polystyrol[α-(succinimidooxycarbonyl)ethylcarbonyl]-aminopoly(oxyethylen) (I)

Die Derivatisierung des PS-POE-Trägers ($MG_{POE}$ = 5100, 163 µmol OH/g) erfolgt analog Makromol. Chem. 182, 1379-1384 (1981) bzw. Angew. Chem. 24, 863-874 (1975). Die Kapazität von I beträgt 75.6 % der ursprünglich vorhandenen.

2.5 g (37 µmol) Rinderserumalbumin werden in 10 ml Wasser gelöst und mit 13 ml einer 1-molaren $NaHCO_3$-Lösung auf pH 8 eingestellt. Die Albuminlösung wird zentrifugiert, dann mit 160 mg des Trägers I versetzt und 22 h im Dunkeln bei Raumtemperatur gerührt. Nach Beendigung der Reaktion wird abgesaugt und der Träger sorgfältig mit Wasser gewaschen. Nachdem kein Albumin mehr im Filtrat nachweisbar ist, wird noch mindestens 15 mal mit Wasser nachgewaschen und im Vakuum über $P_4O_{10}$ getrocknet.

Beladung an Albumin: 0,5 µmol/g = 33 mg Albumin/g Träger

Tab. 1: Syntheseverlauf der Kupplungen am Polymer bis zum Dekapeptid der Insulin-B-Kettensequenz 30-21:

| Nr. | Sequenz | AS-Derivat | Kupplungsdauer (Stnd.) | Kupplungsausbeute in % |
|---|---|---|---|---|
| 1 | $B_{30}$ | BOC-Ala-OBzl(2-$NO_2$-4-COOH (B) | 20 | 99.4 |
| 2 | $B_{30-29}$ | BOC-Lys(o-BrZ)-OH (A) | 3 | 99.4 |
| 3 | $B_{30-28}$ | BOC-Pro (A) | 2 | 99.4 |
| 4 | $B_{30-27}$ | BOC-Thr(Bzl)-OH (A) | 6 | 99.4 |
| 5 | $B_{30-26}$ | BOC-Tyr(o-ClZ)-OH (B) | 17 | 99.4 |
| 6 | $B_{30-25}$ | BOC-Phe (A) | 2 | 99.4 |
| 7 | $B_{30-24}$ | BOC-Phe (A) | 2 | 99.4 |
| 8 | $B_{30-23}$ | BOC-Gly (A) | 1 | 99.4 |
| 9 | $B_{30-22}$ | BOC-Arg(Mbs)-OH (A) | 3 | 99.4 |
| 10 | $B_{30-21}$ | BOC-Glu(Bzl)-OH (A) | 3 | 99.4 |

Tab. 2: Eigenschaften von verschiedenen PS-POE-Pfropfcopolymeren

| | PS-POE-2000 Beispiel 2 | PS-POE-5600 Beispiel 3 | PS-POE-6900 Beispiel 4 |
|---|---|---|---|
| Gewichtszunahme pro g eingesetztem, nach Beispiel 1 dargestelltem PS-TEG-Träger | 2 g | 5,6 g | 6,9 g |
| Mittleres Molekulargewicht des gepfropften POE (dalton) | 2000 | 5600 | 6900 |
| Freie Hydroxylgruppen pro g Copolymer (meq/g) | 0,33 | 0,154 | 0,13 |
| % Beladung bezogen auf freie Hydroxylgruppen des PS-TEG-Trägers | 100 | 100 | 100 |
| Elementaranalyse | | | |
| C gefunden | 64,1 | 59,3 | 59,0 |
| berechnet | 64,9 | 59,0 | 58,2 |
| H gefunden | 9.6 | 10,0 | 10,3 |
| berechnet | 8.5 | 8,9 | 8,9 |
| O gefunden | 26.3 | 30,6 | 30,7 |
| berechnet | 26.6 | 32,1 | 32,8 |

## Patentansprüche

1. Pfropfcopolymerisate, die an einem vernetzten Polymerisat mehrere Polyoxyethylenreste mit einem mittleren Molekulargewicht von 500 - 20 000 aufweisen, wobei 0,02 - 15 meq freie Hydroxygruppen/g Copolymerisat vorhanden sind und wobei die Pfropfcopolymerisate dadurch erhältlich sind, daß man das vernetzte Polymerisat mit Ethylenoxid zur Reaktion bringt.

2. Pfropfcopolymerisat nach Anspruch 1, worin das mittlere Molekulargewicht des Polyoxyethylenrestes 800 - 10 000 beträgt.

3. Pfropfcopolymerisat nach einem der Ansprüche 1 oder 2, worin das vernetzte Polymerisat ein Polyvinylalkohol, Polyhydroxystyrol, aus chlormethyliertem Polystyrol und Ethylenglykol oder Oligoethylenglykolen der Formel $H-(OCH_2CH_2)_n-OH$, worin n für 2 - 4 steht, hergestelltes Polymerisat oder durch Hydroxygruppen funktionalisiertes Polyacrylat oder Polymethacrylat ist.

4. Verfahren zur Herstellung der Pfropfcopolymerisate der Ansprüche 1 bis 3, dadurch gekennzeichnet, daß man das vernetzte Polymerisat mit Ethylenoxid zur Reaktion bringt.

5. Verfahren nach Anspruch 4, dadurch gekennzeichnet, daß man vernetzte Polymerisate mit Hydroxygruppen verwendet.

6. Verfahren nach einem der Ansprüche 4 oder 5, dadurch gekennzeichnet, daß man die Reaktionstemperatur im Bereich von 20 - 100 °C, insbesondere 60 - 80 °C, wählt.

7. Verfahren nach einem der Ansprüche 4 bis 6, dadurch gekennzeichnet, daß die Reaktionszeit 30 Minuten bis 150 Stunden beträgt.

8. Verfahren nach Anspruch 4, dadurch gekennzeichnet, daß man ein vernetztes Polymerisat verwendet, an das Oligoethylenglykolketten der Formel $H\text{-}(OCH_2CH_2)_n\text{-}OH$, worin n für 2 bis 4 steht, gebunden sind.

9. Verfahren nach Anspruch 8, dadurch gekennzeichnet, daß das vernetzte Polymerisat ausgehend von chlormethyliertem Polystyrol erhältlich ist.

10. Verwendung der Pfropfcopolymerisate der Ansprüche 1 bis 3 als Träger für Peptid- oder Nucleotidsynthesen oder zur kovalenten Fixierung von Peptiden, Protein-Wirkstoffen und Enzymen für die Affinitätschromatographie, Diagnostika und biotechnologische Verfahren.

**Claims**

1. Graft copolymers which have, on a cross-linked polymer, a plurality of polyoxyethylene groups having an average molecular weight of 500 to 20,000, there being 0.02 to 15 meq of free hydroxy groups per g of copolymer, the graft copolymers being obtainable by reacting the cross-linked polymer with ethylene oxide.

2. Graft copolymer according to claim 1, wherein the average molecular weight of the polyoxyethylene group is 800 to 10,000.

3. Graft copolymer according to one of claims 1 or 2, wherein the cross-linked polymer is a polyvinyl alcohol, polyhydroxystyrene, polymer prepared from chloromethylated polystyrene and ethyleneglycol or oligoethyleneglycols of formula $H\text{-}(OCH_2CH_2)_n\text{-}OH$ wherein n represents 2 to 4, or polyacrylate or polymethacrylate functionalised by hydroxy groups.

4. Process for preparing the graft copolymers of claims 1 to 3, characterised in that the cross-linked polymer is reacted with ethylene oxide.

5. Process according to claim 4, characterised in that cross-linked polymers having hydroxy groups are used.

6. Process according to one of claims 4 and 5, characterised in that the reaction temperature is selected within the range from 20 to 100 °C, more particularly 60 to 80 °C.

7. Process according to one of claims 4 to 6, characterised in that the reaction time ranges from 30 minutes to 150 hours.

8. Process according to claim 4, characterised in that a cross-linked polymer is used to which oligoethyleneglycol chains of formula $H\text{-}(OCH_2CH_2)_n\text{-}OH$, wherein n represents 2 to 4, are bound.

9. Process according to claim 8, characterised in that the cross-linked polymer is obtainable starting from chloromethylated polystyrene.

10. Use of the graft copolymers of claims 1 to 3 as carriers for peptide or nucleotide synthesis or for the covalent fixing of peptides, protein active substances and enzymes for affinity chromatography, diagnostic agents and biotechnological processes.

**Revendications**

1. Copolymères greffés qui présentant, sur un polymère réticulé, plusieurs groupes polyoxyéthylène à poids moléculaire moyen de 500 à 20 000, 0,02 à 15 meq de groupes hydroxy libres/g de copolymère

étant présents et les copolymères greffés pouvant être obtenus en faisant réagir le polymère réticulé avec de l'oxyde d'éthylène.

2. Copolymère greffé suivant la revendication 1, dans lequel le poids moléculaire moyen du groupe polyoxyéthylène est de 800 à 10 000.

3. Copolymère greffé suivant l'une des revendictions 1 ou 2, dans lequel le polymère réticulé est un alcool polyvinylique, un polyhydroxystyrène, un polymère préparé à partir de polystyrène chlorométhylé et d'éthylèneglycol ou d'oligoéthylèneglycols de la formule $H-(OCH_2CH_2)_n-OH$, dans laquelle n représente un nombre de 2 à 4, ou un polyacrylate ou polyméthacrylate rendu fonctionnel par des groupes hydroxy.

4. Méthode de préparation des copolymères greffés suivant les revendictions 1 à 3, caractérisée en ce que l'on fait réagir le polymère réticulé avec de l'oxyde d'éthylène.

5. Méthode suivant la revendication 4, caractérisée en ce que l'on utilise des polymères à groupes hydroxy.

6. Méthode suivant l'une des revendications 4 ou 5, caractérisée en ce que l'on choisit une température de réaction comprise entre 20 et 100 ° C, en particulier entre 60 et 80 ° C.

7. Méthode suivant l'une des revendications 4 à 6, caractérisée en ce que le temps de réaction est de 30 minutes à 150 heures.

8. Méthode suivant la revendication 4, caractérisée en ce que l'on utilise un polymère réticulé auquel sont liées des chaînes d'oligoéthylèneglycol de formule $H-(OCH_2CH_2)_n-OH$, dans laquelle n représente un nombre de 2 à 4.

9. Méthode suivant la revendication 8, caractérisée en ce que le polymère réticulé peut être obtenu à partir de polystyrène chlorométhylé.

10. Utilisation des copolymères greffés des revendications 1 à 3 comme porteur pour les synthèses de peptides ou de nucléotides ou pour la fixation covalente de peptides, substances actives protéiques et enzymes pour la chromatographie d'affinité , les diagnostics et les procédés biotechnologiques.

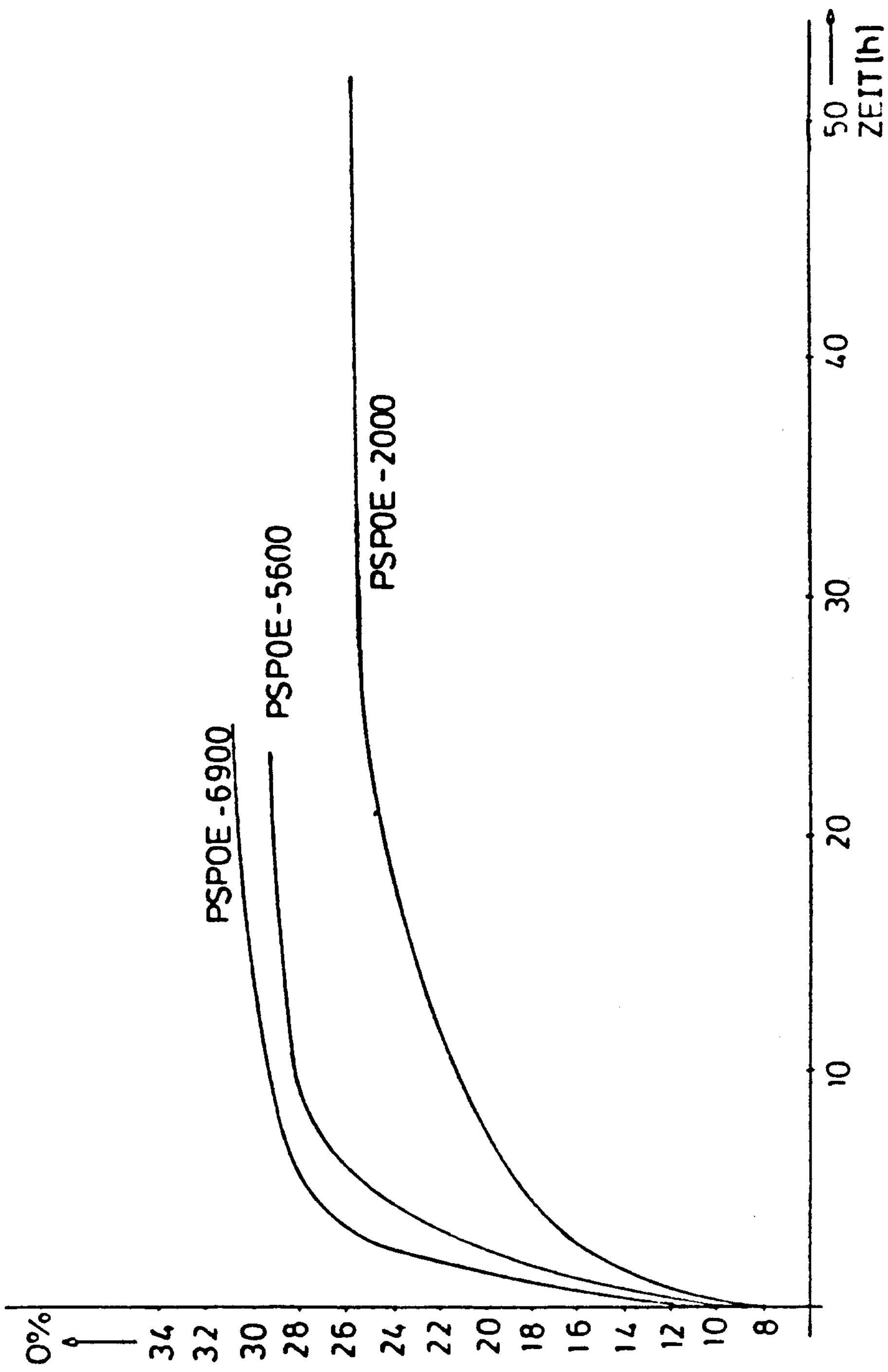
O%
34
32
30
28
26
24
22
20
18
16
14
12
10
8
10
20
30
40
50
ZEIT [h]
PSPOE-6900
PSPOE-5600
PSPOE-2000

Figur 1